# EUROPÄISCHE PATENTSCHRIFT

(11) **EP 0 939 212 B1**
(45) Veröffentlichungstag und Bekanntmachung des Hinweises auf die Patenterteilung: **15.09.2004**
(21) Anmeldenummer: 99101274.1
(22) Anmeldetag: 23.01.1999
(51) Int. Cl.: F02D 41/14

(54) **Verfahren und Motorsteuergerät zur Korrektur eines rechnerisch ermittelten Drehmoments im Antriebsstrang eines Kraftfahrzeugs**
Engine control method and device for the correction of the computed torque in the drive train of a motor vehicle
Méthode et dispositif de contrôle d'un moteur automobile avec correction du couple de propulsion

(30) Priorität: 27.02.1998 DE 19808167
(43) Veröffentlichungstag der Anmeldung: 01.09.1999
(73) Patentinhaber: DaimlerChrysler AG, 70567 Stuttgart (DE)
(72) Erfinder: Kalweit, Dieter, 73614 Schorndorf (DE); Merkle, Sven, 70327 Stuttgart (DE); Wörner, Ralf, Dr., 71394 Kernen i.R. (DE)

(56) Entgegenhaltungen:
- EP-A- 0 787 619
- DE-A- 3 914 167
- DE-A- 4 304 779
- DE-A- 19 527 130
- US-A- 5 072 711

## Beschreibung

Die Erfindung betrifft ein Verfahren und ein Motorsteuergerät zur Korrektur eines rechnerisch ermittelten Drehmoments im Antriebsstrang eines Kraftfahrzeugs nach dem Oberbegriff des Anspruches 1 bzw. 12.

Aus der Druckschrift DE 39 14 167 A1 ist ein Sicherheitssystem für ein Kraftfahrzeug bekannt, das gewährleisten soll, daß die Drosselklappe der Brennkraftmaschine bei nicht betätigtem Fahrpedal auch bei einem Ausfall des Drosselklappen-Regelsystems in die Schließstellung zurückkehrt. Über Sensoren werden die Gaspedalstellung und das Drehmoment am Getriebeausgang erfaßt, wobei das Drehmoment mit einem vorgegeben Minimalwert verglichen und ein Fehlersignal erzeugt wird, falls das tatsächliche Drehmoment den Minimalwert übersteigt. Das Fehlersignal wirkt auf eine Einrichtung zur Unterbrechung des Betriebs der Brennkraftmaschine.

Dieses System berücksichtigt nur den Ausfall des Drosselklappen-Regelsystems, darüberhinaus sind aber keine weiteren Regelungs- und Steuerungsmöglichkeiten, insbesondere zur Beeinflussung der Fahrstabilität, möglich. Ein weiterer Nachteil liegt in der Verwendung des Drehmomentsensors, dessen Großserieneinsatz bislang nicht zufriedenstellend gelöst werden konnte.

In der Druckschrift DE 43 04 779 A1 wird eine Vorrichtung zur Steuerung des von einer Antriebseinheit abzugebenden Drehmoments eines Fahrzeugs vorgeschlagen. Hierzu werden Leistungsparameter der Antriebseinheit berechnet und einer Korrektur hinsichtlich der Motor-Drehmomentverluste und des Drehmomentbedarfs von Nebenaggregaten unterzogen, indem eine stationäre Abweichung eines Leerlaufreglerausgangssignals von 0 erfasst und für einen Arbeitspunkt ein Adaptionswert berechnet wird. Der Adaptionswert wird so berechnet, daß das Leerlaufreglerausgangssignal auf den Wert 0 gebracht wird. Die Korrektur ist nur in Verbindung mit dem Leerlaufdrehzahlregler möglich.

Aus der Druckschrift DE 195 27 130 A1 ist eine Kraftübertragungs-Steuervorrichtung bekannt, die einen Mikrocomputer zum Berechnen und Abschätzen der Werte des Drehmoments am Eingang eines Drehmomentwandlers für ein Automatikgetriebe und der Werte des Übersetzungsverhältnisses des Automatikgetriebes umfaßt. Hierzu werden bestimmte Kennwerte des Motors und des Drehmomentwandlers experimentell ermittelt und in Kennfeldern abgespeichert. Über im Mikrocomputer abgelegte Beziehungen zwischen diesen Kennwerten und den gesuchten Werten für das Drehmoment und das Übersetzungsverhältnis ist es möglich, Abschätzungen für die gesuchten Werte zu erhalten.

Problematisch hierbei ist, daß die Leistungsaufnahme von Nebenaggregaten des Fahrzeugs, beispielsweise die Klimaanlage, einen starken Einfluß auf den Referenzwert des Drehmoments ausübt, wodurch eine eindeutige Signaltrennung des bekannten Drehmoments in einen dem Motor zuzuordnenden Anteil und einen den Nebenaggregaten zuzuordnenden Anteil nicht möglich ist. Je nach Fahrzustand, der der Ermittlung des Referenzwerts des Drehmoments zugrunde gelegt wird, setzt sich das Drehmoment aus unterschiedlich hohen Anteilen für den Motor und die Nebenaggregate zusammen. Der Wert für die Korrektur des berechneten Drehmoments schwankt dadurch in Abhängigkeit des MotorBetriebszustandes und der eingeschalteten Nebenaggregate.

Die Druckschrift US-A-5 072 711 beschreibt eine Steuerung für eine Kraftstoffeinspritzung eines Motors eines Kraftfahrzeugs. Die Steuerung erkennt selbsttätig, ob das Kraftfahrzeug mit einem Automatikgetriebe oder mit einem Handschaltgetriebe ausgerüstet ist und wählt in Abhängigkeit davon die passende Betriebsweise aus.

Der Erfindung liegt das Problem zugrunde, das Drehmoment im Antriebsstrang eines Kraftfahrzeugs rechnerisch so genau wie möglich zu ermitteln.

Dieses Problem wird erfindungsgemäß mit den Merkmalen des Anspruches 1 bzw. 12 gelöst.

Das neue Verfahren bzw. Motorsteuergerät erlaubt eine Reduzierung des systematischen Fehlers bei der Berechnung des Drehmoments. Das Verfahren bzw. das Motorsteuergerät kann sowohl bei Automatikgetrieben als auch bei Handschaltgetrieben eingesetzt werden. Über ein Erkennungssignal kann zwischen Automatikgetriebe und Handschaltgetriebe unterschieden werden, so daß eine gesonderte Ausführung des Motorsteuergeräts für die jeweilige Getriebeart nicht erforderlich ist.

Das Erkennungssignal wird für die Auswahl der interessierenden Parameter und Zustandsgrößen zur Beschreibung der Motorund Getriebe-Betriebszustände herangezogen. Je nach Getriebeart werden unterschiedliche Zustände berücksichtigt, die für einen Abgleich zwischen berechnetem und tatsächlichem Drehmoment erfüllt sein müssen. Die Motor- und Getriebe-Betriebszustände werden so gewählt, daß die Kurbelwelle unbelastet ist, daß also das tatsächliche, an der Kurbelwelle angreifende Drehmoment gleich Null ist. Ausgehend von diesem bekannten Drehmoment-Nullwert wird das für diesen Zustand berechnete Drehmoment herangezogen und mit dem Nullwert verglichen. Eine eventuelle Abweichung des berechneten Drehmoments vom Nullwert wird als Regelgröße für die Korrektur weiterer, rechnerisch ermittelter Drehmomente herangezogen.

Die Korrektur des Drehmoments wird bevorzugt bei ausgeschalteten Nebenaggregaten durchgeführt, um eine Verfälschung des auf Null festgelegten, tatsächlichen Drehmoments zu vermeiden und die Abweichung des berechneten Drehmoments möglichst präzise bestimmen zu können.

In zweckmäßiger Weiterbildung des Verfahrens wird das berechnete Drehmoment aus zwei Komponenten zusammengesetzt, einem effektiven Drehmoment und einem Restmoment zur Berücksichtigung von Verlustmomenten, welche sich insbesondere durch Addition innermotorischer Drehmomentverluste und einem Drehmoment-Adaptionswert zur Genauigkeitsverbesserung des berechneten Drehmoments zusammensetzen. Die Regelgröße, gegebenenfalls multipliziert mit einem Gewichtungsfaktor, kann für den Fall, daß das berechnete Drehmoment im betrachteten Betriebszustand ungleich Null ist, zu dem Drehmoment-Adaptionswert aufaddiert werden. Man erhält dadurch eine Verschiebung des Drehmoment-Adaptionswerts und in der Folge eine Korrektur für sämtliche berechneten Drehmomente für alle Motor- und Getriebe-Betriebszustände. Sobald die Bedingungen für ein tatsächliches Drehmoment gleich Null wieder erreicht sind, kann eine neue Regelgröße gebildet und der Drehmoment-Adaptionswert erneut angepaßt werden.

Die Bedingungen für ein tatsächliches Drehmoment gleich Null sind je nach Getriebeart unterschiedlich. Bei einem Handschaltgetriebe befindet sich das Getriebe vorteilhaft im Leerlauf, die Fahrzeuggeschwindigkeit ist Null und der Motor muß seine Betriebstemperatur erreicht haben. Diese Bedingungen müssen erfüllt sein, um instationäre und dynamische Einflüsse auszuschalten.

Bei einem Automatikgetriebe wird vorzugsweise der Wandlerbetriebszustand für die Festlegung der Bedingungen herangezogen. Das tatsächliche Drehmoment ist Null, sofern die Kurbelwellendrehzahl etwa der Drehzahl der angetriebenen Räder entspricht, so daß die beiden Schaufeln des Wandlers annähernd die gleiche Drehzahl aufweisen. Daneben können auch die Fahrzeuggeschwindigkeit und die Motortemperatur berücksichtigt werden.

Das Motorsteuergerät umfaßt verschiedene, untereinander kommunizierende Module. In einem ersten Modul wird ein Erkennungssignal zur Unterscheidung zwischen Automatik- und Handschaltgetriebe erzeugt. In einem zweiten Modul wird ein Zustandssignal erzeugt, welches anzeigt, ob diejenigen Motorund Getriebe-Betriebszustände erreicht sind, bei denen das an der Kurbelwelle angreifende tatsächliche Drehmoment gleich Null ist. In einem dritten Modul wird ein Drehmoment-Adaptionswert aus der Abweichung des berechneten Drehmoments vom tatsächlichen Drehmoment gebildet; das dritte Modul ist durch das Zustandssignal aus dem zweiten Modul aktivierbar.

Diese Ausführung hat den Vorteil, daß sämtliche Bedingungen, welche für ein tatsächliches Drehmoment gleich Null erfüllt sein müssen, vorab festgelegt und abgeprüft werden können, bevor die Berechnung des Drehmoment-Adaptionswerts durchgeführt wird. Außerdem können mit nur einem Motorsteuergerät sowohl Automatikgetriebe als auch Handschaltgetriebe berücksichtigt werden.

Weitere Vorteile und zweckmäßige Ausführungsformen sind den weiteren Ansprüchen, der Figurenbeschreibung und den Zeichnungen zu entnehmen. Es zeigen:
- Fig. 1: ein Blockschaltbild eines Motorsteuergeräts,
- Fig. 2: ein Blockschaltbild eines Berechnungsblocks des Motorsteuergeräts.

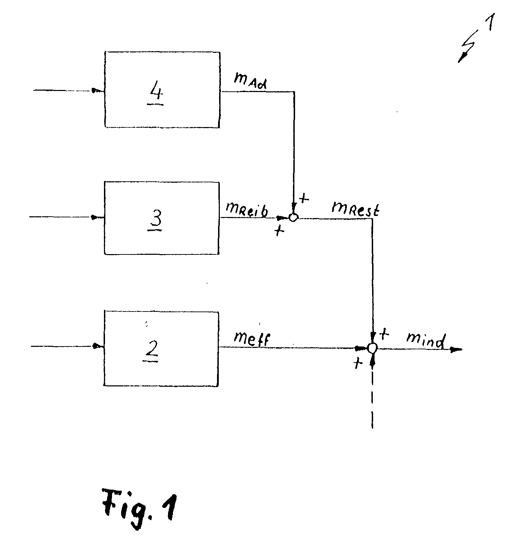

Das in Fig. 1 dargestellte Blockschaltbild zeigt schematisch einen Ausschnitt eines Motorsteuergeräts 1, mit dem das Drehmoment im Antriebsstrang eines Kraftfahrzeugs rechnerisch ermittelt werden kann. Das Motorsteuergerät 1 weist verschiedene Berechnungsblöcke 2, 3 und 4 auf, denen Eingangssignale, welche physikalische Zustandsgrößen und Parameter der Brennkraftmaschine bzw. des Antriebsstranges repräsentieren, zur Ermittlung verschiedener Drehmomentkomponenten zuführbar sind. Die ermittelten Drehmomentkomponenten stehen am Ausgang jedes Berechnungsblocks 2, 3, 4 in Form von Drehmoment-Ausgangssignalen zur Verfügung.

Im Berechnungsblock 2 wird das effektive, an der Kurbelwelle anliegende Drehmoment m_{eff} berechnet bzw. diesem Berechnungsblock wird das effektive Drehmoment m_{eff} von anderen elektronischen Motorkomponenten, beispielsweise Komponenten zur elektronischen Stabilitätskontrolle, zugeführt. Am Ausgang des Berechnungsblocks 2 wird das effektive Drehmoment m_{eff} mit einem Restmoment m_{Rest}, welches Verlustmomente und einen Korrekturwert berücksichtigt, zu einem indizierten Gesamt-Drehmoment m_{ind} aufaddiert. Das Restmoment m_{Rest} setzt sich additiv aus zwei Komponenten zusammen: dem Verlustmoment m_{Reib} zur Berücksichtigung sämtlicher innermotorischer Verluste, insbesondere einem mechanischen Reibungsanteil, motorischen Restmomenten und einem höhenabhängigen Anteil der Gaswechselarbeit, sowie dem Drehmoment-Adaptionswert m_{Ad}, welcher zur Genauigkeitsverbesserung des berechneten Drehmoments m_{eff} herangezogen wird. Das Verlustmoment m_{Reib} wird im Berechnungsblock 3, der Drehmoment-Adaptionswert m_{Ad} im Berechnungsblock 4 berechnet.

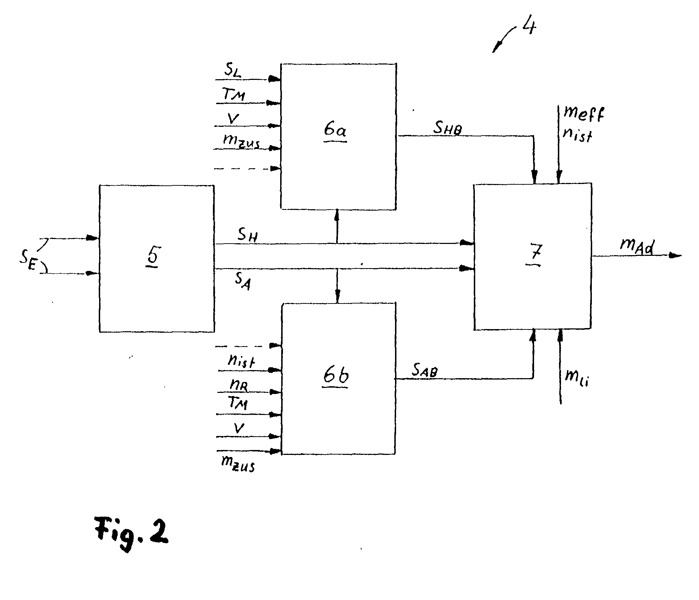

Fig. 2 zeigt schematisch den Ablauf im Berechnungsblock 4 zur Erzeugung des Drehmoment-Adaptionswerts m_{Ad}. Der Berechnungsblock 4 umfaßt mehrere, ihrer Funktion nach getrennt dargestellte Module 5, 6a, 6b und 7.

Das erste Modul 5 dient der Erzeugung eines logischen Erkennungssignals S_{H} bzw. S_{A} für die Feststellung der verwendeten Getriebeart "Handschaltgetriebe" oder "Automatikgetriebe". Hierfür werden dem Modul 5 logische Eingangssignale S_{E} zugeführt, die beispielsweise aus einem intern eingesetzten Datenbus stammen und als CAN-Code vorliegen.

In den Modulen 6a und 6b werden logische Zustandssignale S_{HB} bzw. S_{AB} erzeugt, die anzeigen, ob die für eine Korrektur des Drehmoments erforderlichen Voraussetzungen vorliegen. Diese Voraussetzungen betreffen Motor- und Getriebe-Betriebszustände, bei denen das tatsächliche, an der Kurbelwelle anliegende Drehmoment bekannt. Es ist vorgesehen, einen Motor- und Getriebe-Betriebszustand auszuwählen, bei dem das tatsächliche Drehmoment gleich Null ist.

Das Modul 6a dient der Erkennung der Motor- und Getriebe-Betriebszustände bei Einsatz eines Handschaltgetriebes. Als aktivierendes Eingangssignal wird dem Modul 6a das Erkennungssignal S_{H} zugeführt, das anzeigt, daß ein Handschaltgetriebe verwendet wird. Es werden daraufhin weitere Parameter und Zustandsgrößen erfaßt, die dem Modul 6a als weitere Eingangssignale zugeführt werden. Diese weiteren Eingangssignale sind ein logisches Leerlaufsignal S_{L}, die Motortemperatur T_{M}, die Fahrzeuggeschwindigkeit v, Zusatzmomente m_{zus}, die von Nebenaggregaten herrühren sowie gegebenenfalls weitere Eingangsgrößen wie Heizung des Katalysators, Anlasser, Drosselklappenwinkel, Drehzahl, etc.

Das Leerlaufsignal S_{L} zeigt an, ob der Leerlauf eingelegt worden ist, was als notwendige Bedingung für die Drehmomentkorrektur erfüllt sein muß. Weiterhin muß der Motor im Stationärbetrieb laufen, insbesondere muß die Motortemperatur T_{M} oberhalb einer vorgegebenen Mindesttemperatur liegen. Die Fahrzeuggeschwindigkeit muß gleich Null sein und es dürfen keine Nebenaggregate eingeschaltet sein, so daß kein Zusatzmoment m_{zus} anfällt. Sind diese Bedingungen erfüllt, so ist die Kurbelwelle unbelastet, das tatsächliche Drehmoment ist Null. Das logische Zustandssignal S_{HB} am Ausgang des Moduls 6a wird auf "wahr" geschaltet und als aktivierendes Eingangsund Schaltsignal dem Modul 7 zugeführt, in dem die Berechnung des Drehmoment-Adaptionswerts m_{Ad} durchgeführt wird.

Das Modul 6b dient der Erkennung der Motor- und Getriebe-Betriebszustände bei Einsatz eines Automatikgetriebes. Als aktivierendes Eingangssignal wird dem Modul 6b das Erkennungssignal S_{A} aus dem ersten Modul 5 zugeführt, das anzeigt, daß ein Automatikgetriebe eingesetzt wird. Die Bedingungen für tatsächliches Drehmoment gleich Null liegen vor, wenn die beiden Schaufeln des Wandlers des Automatikgetriebes etwa mit gleicher Drehzahl umlaufen. Um dies beurteilen zu können, werden dem Modul 6b die Kurbelwellendrehzahl nᵢₛₜ und die Drehzahl n_{R} der angetriebenen Räder zugeführt. Gegebenenfalls wird auch der Gradient des Drehzahlverlaufs berücksichtigt, um ein ausreichend großes Zeitintervall für den Vergleich von Kurbelwellendrehzahl nᵢₛₜ und Drehzahl n_{R} der angetriebenen Räder zu erhalten.

Weitere Eingangsgrößen sind die Motortemperatur T_{M} zur Beurteilung, ob ein stationärer Motorbetrieb vorliegt, die Fahrzeuggeschwindigkeit v sowie Zusatzmomente m_{zus} von Nebenaggregaten, welche Null sein müssen. Bei Vorliegen aller Bedingungen wird das logische Zustandssignal S_{AB} am Ausgang des Moduls 6b auf "wahr" geschaltet und dem Modul 7 zugeführt.

Dem Modul 7 werden als physikalische Eingangssignale das berechnete effektive Drehmoment m_{eff}, die Kurbelwellendrehzahl nist sowie ein oberer und unterer Drehmoment-Begrenzungswert mₗᵢ zugeführt. Als logische Eingangssignale liegen die Zustandssignale S_{HB}, S_{AB} und die Erkennungssignale S_{H}, S_{A} aus dem ersten Modul 5 an; die logischen Eingangssignale werden zur Berücksichtigung unterschiedlicher Berechnungsvorschriften bzw. unterschiedlicher Multiplikatoren für Handschaltgetriebe und Automatikgetriebe herangezogen.

Weicht das berechnete effektive Drehmoment m_{eff} vom tatsächlichen Drehmoment, welches gleich Null ist, ab, so wird das berechnete Drehmoment m_{eff} zur Bildung eines neuen Drehmoment-Adaptionswerts mad herangezogen, indem das Drehmoment m_{eff} mit einem Gewichtungsfaktor multipliziert wird und zu einem Roh-Adaptionswert hinzu addiert wird. Der Roh-Adaptionswert ist für den ersten Berechnungsdurchgang als Initialwert abgespeichert bzw. ist der Adaptionswert aus vorangegangenen Berechnungszyklen. Der neue, modifizierte Drehmoment-Adaptionswert wird anschließend über die Drehmoment-Begrenzungswerte mₗᵢ limitiert und durch Multiplikation mit einem drehzahlabhängigen Bewertungsfaktor korrigiert. Der endgültige Drehmoment-Adaptionswert m_{Ad} liegt in Signalform am Ausgang des Moduls 7 an und wird gemäß Fig. 1 zum effektiven berechneten oder vorgegebenen Drehmoment m_{eff} hinzuaddiert.

## Patentansprüche

1. Verfahren zur Korrektur eines rechnerisch ermittelten Drehmoments im Antriebsstrang eines Kraftfahrzeugs, wobei
- in einem ersten Schritt ein Erkennungssignal (S_{A}, S_{H}) für die Erkennung von Automatikgetriebe oder Handschaltgetriebe erzeugt wird,
- in einem zweiten Schritt in Abhängigkeit des Erkennungssignals (S_{A}, S_{H}) ausgewählte Motor- und Getriebe-Betriebszustände festgelegt werden, bei denen das an der Kurbelwelle angreifende tatsächliche Drehmoment gleich Null ist,
- in einem dritten Schritt bei Erreichen dieser Motor- und Getriebe-Betriebszustände das diesen Zuständen zugeordnete, rechnerisch ermittelte Drehmoment (m_{eff}) mit dem tatsächlichen Drehmoment verglichen wird und
- in einem vierten Schritt die Abweichung des rechnerisch ermittelten Drehmoments (m_{eff}) vom tatsächlichen Drehmoment als Regelgröße für die Korrektur weiterer berechneter Drehmomente herangezogen wird.

2. Verfahren nach Anspruch 1,
**dadurch gekennzeichnet,**
**daß** die Korrektur des Drehmoments (m_{eff}) bei ausgeschalteten Nebenaggregaten durchgeführt wird.

3. Verfahren nach Anspruch 1 oder 2,
**dadurch gekennzeichnet,**
**daß** sich das zu berechnende Gesamt-Drehmoment (m_{ind}) aus einem effektivem Drehmoment (m_{eff}) und einem Restmoment (m_{Rest}) zur Berücksichtigung von Verlustmomenten zusammensetzt.

4. Verfahren nach Anspruch 3,
**dadurch gekennzeichnet,**
**daß** das Restmoment (m_{Rest}) sich durch Addition eines motorseitigen Verlustmoments (m_{Reib}) und einem Drehmoment-Adaptionswert (m_{Ad}) zusammensetzt.

5. Verfahren nach einem der Ansprüche 1 bis 4,
**dadurch gekennzeichnet,**
**daß** die Regelgröße mit einem Gewichtungsfaktor multipliziert und zu dem Drehmoment-Adaptionswert (m_{Ad}) aufaddiert wird.

6. Verfahren nach Anspruch 5,
**dadurch gekennzeichnet,**
**daß** der Drehmoment-Adaptionswert (m_{Ad}) auf vorgebbare Grenzwerte (mₗᵢ) limitiert wird.

7. Verfahren nach Anspruch 5 oder 6,
**dadurch gekennzeichnet,**
**daß** der Drehmoment-Adaptionswert (m_{Ad}) mit einem drehzahlabhängigen Bewertungsfaktor multipliziert wird.

8. Verfahren nach einem der Ansprüche 1 bis 7,
**dadurch gekennzeichnet,**
**daß** im Falle eines Handschaltgetriebes als Motor- und Getriebe-Betriebszustände der Leerlauf, Fahrzeuggeschwindigkeit (v) gleich Null und betriebswarmer Stationärbetrieb festgelegt werden.

9. Verfahren nach einem der Ansprüche 1 bis 8,
**dadurch gekennzeichnet,**
**daß** im Falle eines Automatikgetriebes als Motor- und Getriebe-Betriebszustände der Wandlerbetriebszustand bestimmt wird.

10. Verfahren nach Anspruch 9,
**dadurch gekennzeichnet,**
**daß** der Wandlerbetriebszustand über die Kurbelwellendrehzahl (nᵢₛₜ) und die Drehzahl (n_{R}) der angetriebenen Räder festgelegt wird.

11. Verfahren nach Anspruch 9 oder 10,
**dadurch gekennzeichnet,**
**daß** als Motor- und Getriebe-Betriebszustände die Fahrzeuggeschwindigkeit (v) und der betriebswarme Stationärbetrieb festgelegt werden.

12. Motorsteuergerät zur Korrektur eines rechnerisch ermittelten Drehmoments im Antriebsstrang eines Kraftfahrzeugs, zur Durchführung des Verfahrens nach einem der Ansprüche 1 bis 11,
mit einem ersten Modul (5) zur Erzeugung eines Erkennungssignals (S_{A}, S_{H}) für die Erkennung von Automatikgetriebe oder Handschaltgetriebe,
einem zweiten Modul (6a, 6b) zur Erzeugung eines Zustandssignals (S_{AB}, S_{HB}) für die Erkennung von Motor- und Getriebe-Betriebszuständen, bei denen das an der Kurbelwelle angreifende tatsächliche Drehmoment gleich Null ist,
und einem dritten Modul (7) zur Bildung eines Drehmoment-Adaptionswertes (m_{Ad}) aus der Abweichung des berechneten Drehmoments (meff) vom tatsächlichen Drehmoment,
wobei das dritte Modul (7) durch das Zustandssignal (S_{AB}, S_{HB}) des zweiten Moduls (6a, 6b) aktivierbar ist.

13. Motorsteuergerät nach Anspruch 12,
**dadurch gekennzeichnet,**
**daß** das zweite Modul (6a) für die Erkennung des Motor- und Getriebe-Betriebszustands eines Handschaltgetriebes ausgelegt ist, wobei dem zweiten Modul (6a) als Eingangssignale ein den Leerlauf anzeigendes Leerlaufsignal (S_{L}) und ein die Fahrzeuggeschwindigkeit (v) repräsentierendes Signal zuführbar sind.

14. Motorsteuergerät nach Anspruch 12 oder 13,
**dadurch gekennzeichnet,**
**daß** das zweite Modul (6b) für die Erkennung des Motor- und Getriebe-Betriebszustands eines Automatikgetriebes ausgelegt ist, wobei dem zweiten Modul (6b) als Eingangssignale die Kurbelwellendrehzahl (nᵢₛₜ) und die Drehzahl (n_{R}) der angetriebenen Räder zuführbar sind.

15. Motorsteuergerät nach einem der Ansprüche 12 bis 14,
**dadurch gekennzeichnet,**
**daß** dem zweiten Modul (6a, 6b) als Eingangssignal die Zusatzmomente (m_{zus}) der Nebenaggregate zuführbar sind.

16. Motorsteuergerät nach einem der Ansprüche 12 bis 15,
**dadurch gekennzeichnet,**
**daß** dem zweiten Modul (6a, 6b) als Eingangssignal die Motortemperatur (T_{M}) zuführbar ist.

17. Motorsteuergerät nach einem der Ansprüche 12 bis 16,
**dadurch gekennzeichnet,**
**daß** dem dritten Modul (7) Drehmoment-Begrenzungswerte (mₗᵢ), Gewichtungs- und Bewertungsfaktoren zuführbar sind.

## Claims

1. A process for correcting a mathematically determined torque in the drive train of a motor vehicle,
- an identification signal (S_{A}, S_{H}) to identify an automatic transmission or a manual transmission being generated in a first step,
- selected engine and transmission operating statuses in which the actual torque acting upon the crankshaft is equal to zero being determined dependent on the identification signal (S_{A}, S_{H}) in a second step,
- the mathematically determined torque (m_{eff}) associated with these statuses being compared with the actual torque when these engine and transmission operating statues are reached in a third step and
- the variation between the mathematically determined torque (m_{eff}) and the actual torque being used as the control variable for correcting further calculated torques in a fourth step.

2. A process in accordance with claim 1,
**characterised in that**
the correction of the torque (m_{eff}) takes place with auxiliary units switched off.

3. A process in accordance with claim 1 or 2,
**characterised in that**
in order to take into account torque losses the total torque (m_{ind}) to be determined is composed of an effective torque (m_{eff}) and a residual torque (MRₑₛₜ).

4. A process in accordance with claim 3,
**characterised in that**
the residual torque (m_{Rest}) is formed by the addition of an engine-side torque loss (m_{reib}) and a torque adjustment value (m_{Ad}).

5. A process in accordance with one of claims 1 to 4,
**characterised in that**
the control value is multiplied by a weighting factor and added to the torque adjustment value (m_{Ad}).

6. A process in accordance with claim 5,
**characterised in that**
the torque adjustment value (m_{Ad}) is limited to pre-determinable limit values (mₗᵢ).

7. A process in accordance with claim 5 or 6,
**characterised in that**
the torque adjustment value (m_{Ad}) is multiplied by a speed-dependent evaluation factor.

8. A process in accordance with one of claims 1 to 7,
**characterised in that**
in the case of a manual transmission the engine and transmission operating statuses determined are: engine idle, vehicle speed (v) equal to zero and stationary operation with warm engine.

9. A process in accordance with one of claims 1 to 8,
**characterised in that**
in the event of an automatic transmission the engine and transmission operating status determined is: converter operating status.

10. A process in accordance with claim 9,
**characterised in that**
the converter operating status is determined via the crankshaft speed (nᵢₛₜ) and the speed (n_{R}) of the driven wheels.

11. A process in accordance with claim 9 or 10,
**characterised in that**
the engine and transmission operating statues determined are the vehicle speed (v) and stationary operation with warm engine.

12. An engine control device for correcting a mathematically determined torque in the drive train of a motor vehicle to carry out the process disclosed in one of claims 1 to 11 having
- a first module (5) for generating an identification signal (S_{A}, S_{H}) to identify an automatic transmission or a manual transmission,
- a second module (6a, 6b) for generating a status signal to identify engine and transmission statuses in which the actual torque acting upon the crankshaft is equal to zero,
- and a third module (7) for forming a torque adjustment value (m_{Ad}) from the variation between the calculated torque (m_{eff}) and the actual torque,
- it being possible to activate the third module (7) by means of the status signal (S_{AB}, S_{HB}) of the second module (6a, 6b).

13. An engine control device in accordance with claim 12,
**characterised in that**
the second module (6a) is designed to identify the engine and transmission operating status of a manual transmission, it being possible to feed to the second module (6a) as the input signal an idle signal (S_{L}) indicating engine idle and a signal representing the vehicle speed (v).

14. An engine control device in accordance with claim 12 or 13,
**characterised in that**
the second module (6b) is designed to identify the engine and transmission operating status of an automatic transmission, it being possible to feed to the second module (6b) as the input signal the crankshaft speed (nᵢₛₜ) and the speed (v) of the driven wheels.

15. An engine control device in accordance with one of claims 12 to 14,
**characterised in that** it is possible to feed the additional torques (m_{zus}) of the auxiliary units to the second module (6a, 6b) as input signals.

16. An engine control device in accordance with one of claims 12 to 15,
**characterised in that**
it is possible to feed the engine temperature (T_{M}) to the second module (6a, 6b) as the input signal.

17. An engine control device in accordance with one of claims 12 to 16,
**characterised in that**
it is possible to feed torque limitation values (mₗᵢ), weighting and evaluation factors to the third module (7).

## Revendications

1. Procédé pour corriger un couple déterminé par calcul dans la chaîne motrice d'un véhicule automobile, selon lequel
- lors d'une première étape, un signal d'identification (S_{A}, S_{H}) est produit pour l'identification d'une boîte de vitesses automatique ou d'une boîte de vitesses à commutation manuelle,
- lors d'une seconde étape, les états de fonctionnement du moteur et de la boîte de vitesses, qui sont sélectionnés en fonction du signal d'identification (S_{A}, S_{H}) sont fixés, états dans lesquels le couple effectif appliqué au vilebrequin est égal à zéro,
- lors d'une troisième étape, lorsque ces états de fonctionnement du moteur et de la boîte de vitesses sont atteints, le couple (m_{eff}) déterminé par calcul et associé à ces états est comparé au couple effectif, et
- lors d'une quatrième étape, l'écart du couple (m_{eff}) déterminé par calcul par rapport au couple effectif est utilisé en tant que grandeur de régulation pour la correction d'autres couples calculés.

2. Procédé selon la revendication 1, **caractérisé en ce que** la correction du couple (m_{eff}) est exécutée alors que les mécanismes auxiliaires sont débranchés.

3. Procédé selon la revendication 1 ou 2, **caractérisé en ce que** le couple total (m_{ind}) devant être calculé se compose d'un couple effectif (m_{eff}) et d'un couple résiduel (m_{Rest}) pour tenir compte de couples de perte.

4. Procédé selon la revendication 3, **caractérisé en ce que** le couple résiduel (m_{Rest}) est formé par l'addition d'un couple de perte (m_{Reib}) côté moteur et d'une valeur d'adaptation de couple (m_{Ad}).

5. Procédé selon l'une des revendications 1 à 4, **caractérisé en ce que** la grandeur de régulation est multiplié par un facteur de pondération et est ajoutée à la valeur d'adaptation de couple (m_{Ad}).

6. Procédé selon la revendication 5, **caractérisé en ce que** la valeur d'adaptation de couple (m_{Ad}) est limitée à des valeurs limites pouvant être prédéterminées (Mₗᵢ).

7. Procédé selon la revendication 5 ou 6, **caractérisé en ce que** la valeur d'adaptation de couple (m_{Ad}) est multipliée par un facteur d'évaluation qui dépend de la vitesse de rotation.

8. Procédé selon l'une des revendications 1 à 7, **caractérisé en ce que** dans le cas d'une boîte de vitesses à commutation manuelle, le ralenti, la vitesse (v) du véhicule égale à zéro et un fonctionnement stationnaire à chaud sont déterminés en tant qu'états de fonctionnement du moteur et de la boîte de vitesses.

9. Procédé selon l'une des revendications 1 à 8, **caractérisé en ce que** dans le cas d'une boîte de vitesses automatique, l'état de fonctionnement du convertisseur est déterminé en tant qu'états de fonctionnement du moteur et de la boîte de vitesses.

10. Procédé selon la revendication 9, **caractérisé en ce que** l'état de fonctionnement du transducteur est déterminé au moyen de la vitesse de rotation (nᵢₛₜ) du vilebrequin et de la vitesse de rotation (n_{R}) des roues motrices.

11. Procédé selon la revendication 9 ou 10, **caractérisé en ce que** la vitesse (v) du véhicule et le fonctionnement stationnaire à chaud sont déterminés en tant qu'états de fonctionnement du moteur et de la boîte de vitesses.

12. Appareil de commande de moteur pour la correction d'un couple déterminé par calcul dans la chaîne motrice d'un véhicule automobile, pour la mise en oeuvre du procédé selon l'une des revendications 1 à 11,
comportant un premier module (5) servant à produire un signal d'identification (S_{R}, S_{H}) pour l'identification d'une boîte de vitesses automatique ou d'une boîte de vitesses à commutation manuelle,
un second module (6a, 6b) servant à produire un signal d'état (S_{AB}, S_{HB}) pour l'identification d'états de fonctionnement du moteur et de la boîte de vitesses, pour lesquels le couple effectif attaquant le vilebrequin est égal à zéro, et
un troisième module (7) servant à former une valeur d'adaptation de couple (m_{Ad}) à partir de l'écart du couple calculé (m_{eff}), par rapport au couple effectif,
le troisième module (7) pouvant être activé par le signal d'état (S_{AB}, S_{HB}) du second module (6a, 6b).

13. Appareil de commande de moteur selon la revendication 12, **caractérisé en ce que** le second module (6a) est conçu pour l'identification de l'état de fonctionnement du moteur et de la boîte de vitesses dans le cas d'une boîte de vitesses à commutation manuelle, un signal de ralenti (S_{L}) indiquant le ralenti et un signal représentant la vitesse (v) du véhicule pouvant être envoyées, en tant que signaux d'entrée, au second module (6a).

14. Appareil de commande de moteur selon la revendication 12 ou 13, **caractérisé en ce que** le second module (6b) est conçu pour l'identification de l'état de fonctionnement du moteur et de la boîte de vitesses dans le cas d'une boîte de vitesses automatique, la vitesse de rotation (nᵢₛₜ) du vilebrequin et la vitesse de rotation (n_{R}) des roues motrices pouvant être envoyées en tant que signaux d'entrée au second module (6b).

15. Appareil de commande de moteur selon l'une des revendications 12 à 14, **caractérisé en ce que** les couples supplémentaires (m_{zus}) des mécanismes auxiliaires peuvent être envoyés en tant que signal d'entrée au second module (6a, 6b).

16. Appareil de commande de moteur selon l'une des revendications 12 à 15, **caractérisé en ce que** la température du moteur (T_{M}) peut être envoyée en tant que signal d'entrée au second module (6a, 6b).

17. Appareil de commande de moteur selon l'une des revendications 12 à 16, **caractérisé en ce que** des valeurs de limitation de couple (mₗᵢ), un facteur de pondération et un facteur d'évaluation peuvent être envoyés au troisième module (7).
